# EUROPEAN PATENT APPLICATION

(11) **EP 1 385 247 A1**
(43) Date of publication of application: **28.01.2004**
(21) Application number: 03076973.1
(22) Date of filing: 25.06.2003
(51) Int. Cl.: H02G 9/10, H02B 7/08, H02B 1/50

(54) **Protective case for electronic and/or electrical equipment with waterproof and gasproof cable connection**

(30) Priority: 23.07.2002 NL 1021134
(71) Applicant: Odink & Koenderink B.V., 7482 CA Haaksbergen (NL)
(72) Inventor: Kienhuis, Johannes Henricus Maria, 7591 GA Denekamp (NL); Metternich, Stefan Herman Jeroen, 7541 AJ Enschede (NL)
(74) Representative: Riemens, Roelof Harm

(57) **Abstract**

Protective case for electronic and/or electrical equipment, comprising:
- a housing (1) with an internal space in which the equipment is accommodated, wherein the housing (1) comprises an outer casing (25) which is at least partially open from above, in particular closable, and a cover cap (2) which acts as an air chamber and which is at least partially open from below but is closed from above and all around, said cover cap (2) being removable via the at least partially open upper side as the outer casing (25);
- at least one cable connection unit (3) provided in the housing, which on one side is connected inside the housing (1) to the electronic and/or electrical equipment and which on the other side is connected in a conducting manner to at least one wire (5) of an external cable (4).

The connection unit (3) comprises an electrically conducting profile (8) which is connected to the equipment,
wherein a beginning part of the electrically conducting profile (8) and an end part of the cable (4) are embedded together in a sealing compound (12) joined to the housing.

## Description

The invention relates to a protective case for electronic and/or electrical equipment according to the preamble of claim 1.

A case of this type is known, for example, from EP-A-0 982 822. A supply box for a distribution station for electricity is shown herein. The supply box comprises a cover casing which is open from below and otherwise closed, said cover casing being able to swing upwardly open over an inner casing. The inner casing contains a support frame with a voltage distribution unit. If the water level rises, the cover casing acts as an air chamber, whereby the equipment located underneath it in the inner casing is protected against contact with water. Furthermore, a gutter is provided around the supply box with outlets to allow water to flow away to the surrounding ground. A plurality of underground cables, which are connected to a transitional block, are fed in via the circumferential wall of the inner casing. There, the underground cables are connected to flexible cables which lead to different rails of the equipment.

The disadvantage of the known supply box is that the present method for feeding the cables in an airtight manner into the protective case is laborious and requires a lot of space and connection time.

The object of the present invention is to eliminate at least some of the aforementioned disadvantages, or to produce a viable alternative, and, in particular, to produce a reliable watertight and gastight protective case for electronic and/or electrical equipment. More particularly, the object of the invention is to provide a simple, compact and gastight connection for incoming and/or outgoing cables in the protective case.

This object is achieved according to the present invention by a protective case according to claim 1. Here, the protective case comprises a housing with an internal space in which electronic and/or electrical equipment is accommodated. The housing comprises a cover cap which acts as an air chamber. At least one cable connection unit is provided in the housing. The connection unit comprises an electrically conducting profile which is connected on one side to the electronic and/or electrical equipment, and on the other side to a cable originating from outside the housing. Furthermore, a sealing compound is provided which is joined to the housing, and in which both an end part of the connected cable and a beginning part of the electrically conducting profile are embedded together. It has thus appeared that the protective case of the air-chamber type, and in particular the cable inlet and cable connection thereof, can be kept completely watertight and gastight. Small quantities of gas cannot leak out from the inside of the cable.

In a particular embodiment, the electrically conducting profile is an electrically conducting strip. The strip can be bent in the required directions and can be connected in a fixed position to the housing. Due to this fixed positioning of the electrically conducting profile, the sealing compound can be disposed around it to provide a reliable seal. Furthermore, the strip can be designed solid, and thereby per se be completely watertight and gastight.

Further preferred embodiments of the invention are defined in the subclaims.

The invention also relates to a use of a protective case according to claim 8.

The invention will further be explained in detail with reference to the attached drawing, in which:
Fig. 1 is a cross-section of a preferred embodiment of a protective case according to the invention;
Fig. 2 is a top view of Fig. 1 without the cover;
Fig. 3 is a view corresponding to Fig. 1 with the cover cap and cover removed;
Fig. 4 is a part view of the cover in Fig. 1; and,
Fig. 5 is a part view of the cover in Fig. 1.

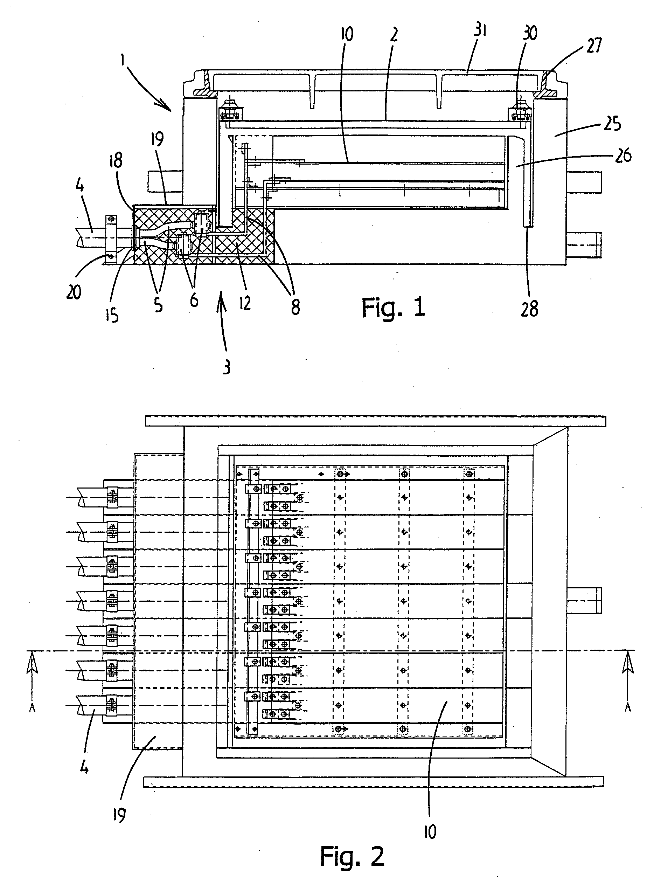

Fig. 1-5 show a protective case according to the invention. The protective case comprises a housing 1 with an internal space which is intended to accommodate electronic and/or electrical equipment therein. The housing 1 is covered from above by a cover cap 2 acting as an air chamber. The functioning of the cover cap as an air chamber will be explained in detail below with reference to the other drawings. The housing 1 comprises a cable connection unit 3, into which a cable 4 is fed. The cable 4 comprises an outer cover which encloses a plurality of wires 5. The wires 5 are connected in an electrically conducting manner to cable insertion clamps 6, which are in turn connected in an electrically conducting manner to electrically conducting profiles 8. The free ends of the electrically conducting profiles 8 are connected in an electrically conducting manner to rails 10 of the electronic and/or electrical equipment.

The exposed wires 5, the cable insertion clamps 6 and the beginning parts of the electrically conducting profiles 8 are embedded together in a sealing manner according to the invention in a sealing compound 12. The sealing compound 12 is joined to the housing 1. As a result, gaseous exchange can no longer take place between the internal space and the environment via the inside of the cable 4 or via the cable connection unit 3.

A possible method for connecting the cable 4 to the cable connection unit 3 will now be explained in detail with reference to Fig. 1.

The cable 4 is stripped over a longitudinal part of its outer cover. A feed-through grommet 15 is pushed over the cable 4. The electrically conducting profiles 8 are already connected in fixed positions to the housing 1. The cable insertion clamps 6 are all attached to extremities of the electrically conducting profiles 8. The cable 4 is then positioned with its feed-through grommet 15 in a complementary recess in and end plate 18 of a filler casing 19 joined to the housing 1. The cable 4 is fixed in place on the end plate 18 by means of a saddle clamp 20. The stripped ends of the wires 5 are inserted into the cable insertion clamps 6. The filler casing 19 is then filled with the sealing compound 12.

The sealing compound 12 is preferably formed by a curable filling compound which, in particular, can be cast as a multi-component casting compound into the filler casing 19 and can then be gently elastically cured. Preferably no heat supply is required for the curing. The multi-component casting compound is, in particular, hydrocarbon-based. Other sealing compounds are also possible, such as a polyurethane-based multi-component casting compound. A certain degree of flexibility after curing is preferable in connection with movements and stresses of the cable and/or the electrically conducting profiles during use.

The electrically conducting profiles 8 are formed here by suitably bent electrically conducting strips which extend partly in a horizontal and partly in a vertical direction. As a result, the cable connection unit 3 can be provided near the underside of the housing, and the electrically conducting profiles 8 bridge the vertical gap to the higher-placed electronic and/or electrical equipment.

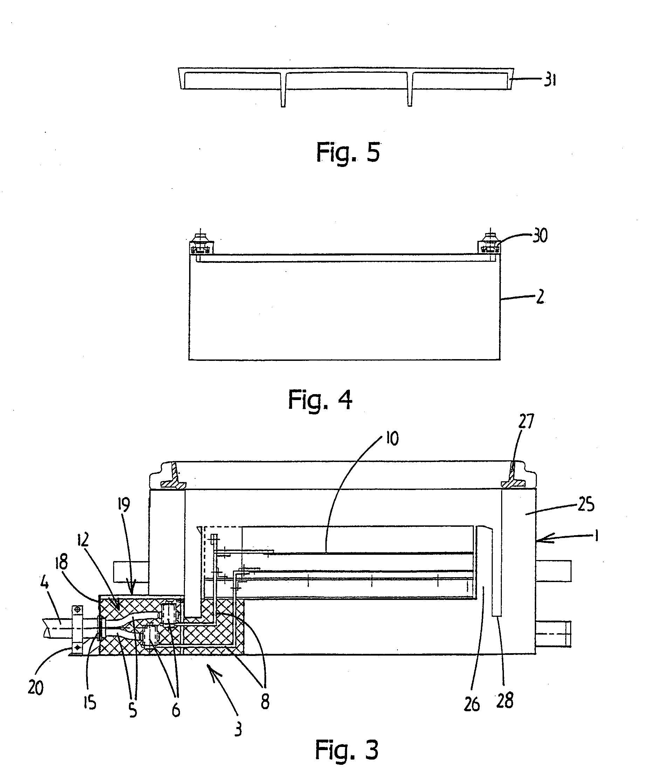

Fig. 3-5 clearly show that the housing 1 comprises an outermost housing part 25 (outer casing) and an innermost housing part 26 (inner casing). The outermost housing part 25 is designed to be open towards the top and comprises a cover edge 27. The innermost housing part 26 is similarly designed to be open towards the top. A support flange 28 is provided between the innermost housing part 26 and the outermost housing part 25. This support flange 28 is intended to provide support for a lower edge of the cover cap 2 in its fitted position.

The cover cap 2 is designed as closed from above and all around, whereas the underside is left open. In the mounted position, the cover cap 2 is delimited upwards by a slot construction 30 provided on the cover cap 2. The housing 1 is covered on the upper side by a removable cover 31 which rests on the cover edge 27. The functioning of the cover cap 2 as an air chamber is as follows. If the water level begins to rise from below, this water will reach the lower edge of the cover cap 2 at a given moment. At the moment when the water reaches this lower edge, a quantity of air is trapped between the cover cap 2 and the vertical walls of the innermost housing part 26. The water level will then be unable to rise much further under the cover cap 2, since the trapped air bubble prevents further ingress. The innermost housing part 26 thus defines an internal space which, thanks to the cover cap 2 acting as an air chamber, is sealed in a watertight manner from the external environment. This water tightness can advantageously be guaranteed by the specific cable connection according to the invention.

As shown in Fig 2, the housing 1 comprises a cable connection unit for seven cables 4 laid next to each other. These can all be embedded together simultaneously in the sealing compound 12.

The protective case according to the invention is specifically suitable for use as a supply box for a distribution station for electricity. Other uses in which cables need to be connected to protective cases for other types of electronic and/or electrical equipment, such as telecommunications equipment, for example, are also possible.

The protective case is specifically intended for at least partial installation underground, in conjunction with resistance to ground water. However, use may also be advantageous aboveground, for example in areas where there is a risk of flooding.

Many variants are possible in addition to the embodiment shown. Thus, the electrically conducting profiles may be designed in a different form and, if required, may be produced from a more flexible conducting material. It is also possible for the electrically conducting profiles 8 not to be directly connected to the electronic and/or electrical equipment, but rather that further electrically conducting means are provided between the free ends of the electrically conducting profiles 8 and the electronic and/or electrical equipment, such as, for example, flexible cables.

Thus a highly reliable protective case for electronic and/or electrical engineering equipment is provided according to the invention, by which water tightness and gas tightness can be guaranteed, even for very long periods. Connection of an external cable to the protective case can be carried out simply and reliably.

## Claims

1. Protective case for electronic and/or electrical equipment, comprising:
- a housing (1) with an internal space in which the electronic and/or electrical equipment is accommodated, wherein the housing (1) comprises an outer casing (25) which is at least partially open from above, in particular closable, and a cover cap (2) which acts as an air chamber and which is at least partially open from below but is closed from above and all around, said cover cap (2) being removable via the at least partially open upper side of the outer casing (25);
- at least one cable connection unit (3) provided in the housing, which on one side is connected inside the housing (1) to the electronic and/or electrical equipment and which on the other side is connected in a conducting manner to the at least one wire (5) of an external cable (4),
**characterised in that**
the connection unit (3) comprises an electrically conducting profile (8) which is connected to the electronic and/or electrical equipment,
wherein a beginning part of the electrically conducting profile (8) and an end part of the cable (4) are embedded together in a sealing compound (12) which is joined to the housing.

2. Protective case according to claim 1, whereby the housing (1) furthermore comprises an inner casing (26) at least partially open from above, wherein the electronic and/or electrical equipment is accommodated, and wherein the cover cap (2) extends over the inner casing (26), leaving a gap between wall parts thereof which extend primarily in a vertical direction.

3. Protective case according to one of the preceding claims, wherein the electrically conducting profile (8) is an electrically conducting strip.

4. Protective case according to one of the preceding claims, wherein the housing (1) at the position of the cable connecting unit (3) is provided with a filler casing (19) intended to be filled with the sealing compound (12).

5. Protective case according to one of the preceding claims, wherein the sealing compound (12) is a curable filling compound.

6. Protective case according to claim 5, wherein the curable filling compound is a multiple-component casting compound, in particular hydrocarbon-based.

7. Protective case according to one of the preceding claims, wherein the cable (4) is a power cable, and the electronic and/or electrical equipment comprise distribution means for electricity.

8. Use of a protective case according to one of the preceding claims, for at least partial installation in the ground.
